# EUROPÄISCHE PATENTSCHRIFT

(11) **EP 3 633 118 B1**
(45) Veröffentlichungstag und Bekanntmachung des Hinweises auf die Patenterteilung: **15.05.2024**
(21) Anmeldenummer: 18198138.2
(22) Anmeldetag: 02.10.2018
(51) Int. Cl.: E04G 11/48, E04G 25/06, E04G 21/16, F16B 7/10

(54) **SCHALUNGSSTÜTZE UND SCHALUNGSSTÜTZVORRICHTUNG**
FORMWORK SUPPORT AND FORMWORK SUPPORT DEVICE
SUPPORT DE COFFRAGE ET DISPOSITIF DE SUPPORT DE COFFRAGE

(43) Veröffentlichungstag der Anmeldung: 08.04.2020
(73) Patentinhaber: DOKA GmbH, 3300 Amstetten (AT)
(72) Erfinder: BURGSTALLER, Gerald, 3300 Amstetten (AT); GREUL, Thomas, 4021 Linz (AT)
(74) Vertreter: SONN Patentanwälte GmbH & Co KG

(56) Entgegenhaltungen:
- EP-A2- 2 649 902
- FR-A- 1 151 864
- FR-A1- 2 525 298
- FR-A1- 2 823 521
- JP-A- H07 197 672

## Beschreibung

Die Erfindung betrifft eine Schalungsstütze aufweisend:
ein oberes Stützenteil,
ein unteres Stützenteil und
eine Absenk- und Anhebeeinrichtung zum Absenken und Anheben des oberen Stützenteils relativ zum unteren Stützenteil zwischen einer Stützstellung zur Abstützung eines Schalungsaufbaus und einer Ausschalstellung zum Abbau des Schalungsaufbaus, wobei die Absenk- und Anhebeeinrichtung eine Spindel mit einem Außengewinde und ein Lager mit einem Innengewinde aufweist,
wobei das Lager mit dem Innengewinde in das Außengewinde der Spindel eingreift,
wobei die Spindel an einem von dem unteren und oberen Stützenteil drehbar gelagert ist und das Lager mit dem anderen von dem unteren und oberen Stützenteil verbunden ist,
wobei die Absenk- und Anhebeeinrichtung im Inneren des oberen bzw. unteren Stützenteils angeordnet ist.

Weiters betrifft die Erfindung eine Schalungsstützvorrichtung mit zumindest einer solchen Schalungsstütze und mit einem Schalungsaufbau, welcher auf der Schalungsstütze abgestützt ist.

Die FR 2 823 521 beschreibt eine Anordnung von Stützvorrichtungen mit jeweils einem Motor und einer Regelungseinrichtung, welche dazu eingerichtet ist, auf Basis eines Sensorsignals den Höhenunterschied der Stützvorrichtungen zueinander mittels einer Fernsteuerung unterhalb eines definierten Schwellwertes zu halten. Bei dieser Stützvorrichtung ist weiters eine Mutter vorgesehen, welche beim Absenken eine Spindel in Drehbewegung versetzt. Die Spindel ist mit einem Getriebemotor verbunden. Der Getriebemotor kann bei der Absenkung als Bremse für die Steuerung der Absenkbewegung verwendet werden. Nachteilig ist jedoch, dass das Ausziehen der Stütze verhältnismäßig aufwendig ist.

Daneben sind aus der FR 1 151 864 A und aus der JP H07 197672 A weitere, jedoch andersartige Schalungsstützen bekannt.

Demnach besteht die Aufgabe der vorliegenden Erfindung darin, zumindest einzelne Nachteile des Standes der Technik zu lindern bzw. zu beseitigen.

Diese Aufgabe wird durch eine Schalungsstütze mit den Merkmalen von Anspruch 1 sowie durch eine Schalungsstützvorrichtung mit den Merkmalen von Anspruch 8 gelöst.

Erfindungsgemäß weist das Lager ein Mutterelement mit dem Innengewinde und ein Sperrelement auf, wobei das Mutterelement und das Sperrelement ineinandergreifende Zähne derart aufweisen, dass die Rotation des Mutterelements in die eine Drehrichtung gesperrt ist, wobei die Spindel beim Absenken des oberen Stützenteils, vorzugsweise durch das Mutterelement, in Drehbewegung versetzt wird, und die Rotation des Mutterelements in die andere Drehrichtung freigegeben ist, so dass das Mutterelement beim Anheben des oberen Stützenteils durch die Spindel in Drehbewegung versetzt wird.

Für die Zwecke dieser Offenbarung beziehen sich die Orts- und Richtungsangaben, wie "oben", "unten", "oberes", "unteres", etc., auf den bestimmungsgemäßen Gebrauchszustand der Schalungsstütze, in welcher die Schalungsstütze in einer im Wesentlichen vertikalen Stellung angeordnet ist.

Somit erfüllt das Lager für die Spindel zwei verschiedene Funktionen. Bei der Absenkung des oberen Stützenteils wird das Mutterelement aufgrund des Gewindeeingriffs der Spindel in die eine Drehrichtung belastet. Durch die Zähne an dem Mutterelement und an dem Sperrelement ist die Rotation des Mutterelements in diese Drehrichtung gesperrt. Bevorzugt werden die Kräfte beim Absenken des oberen Stützenteils so auf die Spindel übertragen, dass die Spindel bei im Wesentlichen stillstehendem Mutterelement in Drehbewegung versetzt wird. Dadurch wird das obere Stützenteil kontinuierlich abgesenkt, während das Mutterelement die Gewindegänge der rotierenden Spindel hinabgleitet. Beim Anheben des oberen Stützenteils relativ zum unteren Stützenteil wird das Mutterelement in die andere, entgegengesetzte Drehrichtung belastet. Aufgrund der asymmetrischen Ausgestaltung der Zähne ist die Rotation des Mutterelements in die andere Drehrichtung freigegeben. Der Gewindeeingriff der Spindel in das Mutterelement führt somit dazu, dass das Mutterelement beim Anheben des oberen Stützenteils in die freigegebene Drehrichtung rotiert wird, während die Spindel im Wesentlichen stillsteht. Vorteilhafterweise kann die Schalungsstütze einerseits sanft abgesenkt, andererseits leichtgängig und rasch angehoben werden.

Je nach Dimension der Schalungsstütze weist die Spindel bevorzugt eine Länge von 20 bis 2000 mm, insbesondere von 300 bis 800 mm auf, um eine Absenkung von der Stützstellung beim Betonieren in die Ausschalstellung nach dem Betonieren zu ermöglichen.

Das Mutterelement des Lagers weist bevorzugt eine Länge von 1/50 bis 2 insbesondere von 1 /10 bis 1/20, im Verhältnis zur Länge der Spindel auf. Beispielsweise weist das Mutterelement eine Länge von 20 bis 300 mm, insbesondere von 30 bis 80 mm auf.

Eine besonders stabile Lagerung kann erzielt werden, wenn das untere Stützenteil an einem Stützfuß zumindest ein Wälz- oder ein Drehlager, insbesondere ein Kugellager, für die Spindel aufweist. Selbstverständlich kann auch ein Gleitlager vorgesehen sein.

Erfindungsgemäß, ist zur Erzielung einer kompakten Schalungsstütze mit hohem Sicherheitsstandard für die Bedienkräfte die Absenk- und Anhebeeinrichtung im Inneren des oberen bzw. unteren Stützenteils angeordnet. Demnach ist die Absenkeinrichtung bei dieser Ausführung vollständig im Inneren des oberen und/oder unteren Stützenteils verborgen.

Wenn das obere Stützenteil als Innenrohr ausgeführt ist, welches in das als Außenrohr ausgebildete untere Stützenteil eingeführt ist, kann eine stabile, teleskopierbare Schalungsstütze erzielt werden.

Sowohl am Mutterelement als auch am Sperrelement sind jeweils mehrere Zähne vorgesehen, welche vorzugsweise jeweils in fangsrichtung der Stirnseite des Mutterelements gesehen voneinander beabstandet sind.

Gemäß einer bevorzugten Ausführungsform weisen die Zähne jeweils eine Sperrflanke zum Sperren der Rotation des Mutterelements relativ zum Sperrelement in die eine Drehrichtung und eine Auflaufflanke zur Freigabe der Rotation des Mutterelements relativ zum Sperrelement in die andere Drehrichtung auf. Die Sperrflanken sind bevorzugt im Wesentlichen vertikal angeordnet. Die Auflaufflanken sind flacher als die Sperrflanken, so dass die Auflaufflanken des Mutterelements über die Auflaufflanken des Sperrelements gleiten können.

Um die Drehung des Mutterelements in die eine Drehrichtung zuverlässig und sicher zu sperren, jedoch in die andere Drehrichtung freizugeben, ist es günstig, wenn das Lager ein Federelement aufweist, mit welchem die Zähne des Mutterelements und des Sperrelements in Richtung einer Eingriffstellung gedrückt werden. Alternativ kann diese Wirkung über das Eigengewicht des Mutterelementes bzw. des Sperrelementes erzielt werden. Somit sind die Zähne in Richtung der Eingriffsstellung vorbelastet. Beim Drehen in die eine Drehrichtung stoßen die Sperrflanken der Zähne aneinander, wobei die Zähne bevorzugt durch die Kraft des Federelements in der Eingriffsstellung gehalten werden. Beim Drehen in die andere Drehrichtung gleiten die Auflaufflächen aneinander ab.

Hinsichtlich einer zuverlässigen Verzahnung zwischen dem Mutter- und dem Sperrelement ist es vorteilhaft, wenn die Zähne an einander zugewandten, vorzugsweise im Wesentlichen horizontal erstreckten Stirnseiten des Mutterelements und des Sperrelements vorgesehen sind. Bevorzugt sind die Zähne an der oberen Stirnseite des Mutterelements und der unteren Stirnseite des Sperrelements vorgesehen.

Gemäß einer bevorzugten Ausführungsform weist das Lager ein Gehäuse auf, in welchem das Mutterelement vorzugsweise im Wesentlichen vollständig aufgenommen ist. Das Gehäuse weist bevorzugt einen Zylinderabschnitt auf, welcher im Wesentlichen passgenau im Inneren des oberen oder unteren Stützenteils angeordnet ist. Zudem kann das Gehäuse einen umlaufenden Flansch aufweisen, welcher insbesondere unterhalb des unteren Endes des oberen Stützenteils angeordnet ist und dessen umlaufende Seitenwand bevorzugt im Wesentlichen bündig mit der Außenseite des oberen Stützenteils abschließt. Bevorzugt weist das Gehäuse, insbesondere an der unteren Stirnseite, eine Durchtrittsöffnung für die Spindel auf.

Gemäß einer bevorzugten Ausführungsform ist das Sperrelement am Gehäuse, vorzugsweise am oberen Endbereich des Gehäuses, befestigt.

Hinsichtlich einer konstruktiv einfachen, stabilen Bauweise ist die Spindel bei einer bevorzugten Ausführungsform drehbar am unteren Stützenteil gelagert, wobei das Lager am unteren Ende des oberen Stützenteils befestigt ist. Bevorzugt ist das Gehäuse fix mit dem oberen Stützenteil verbunden. Vorteilhafterweise steht ein maximaler Weg für die Bewegung des Mutterelements relativ zur Spindel zur Verfügung.

Es kann jedoch auch die Spindel drehbar am oberen Stützenteil gelagert sein, wobei das Lager dann mit dem unteren Stützenteil verbunden ist.

Hinsichtlich einer teilesparenden und stabilen Ausführung ist das Lager bevorzugt durch eine form-, kraft- oder stoffschlüssige Verbindung am oberen Stützenteil fixiert. Hierbei ist es besonders günstig, wenn das Lagerelement über eine Crimpverbindung an dem oberen Stützenteil fixiert ist.

Gemäß einer bevorzugten Ausführungsform weist die Absenk- und Anhebeeinrichtung eine Bremseinheit auf, welche zum Abbremsen der Absenkung des oberen Stützenteils auf eine im Wesentlichen konstante Absenkgeschwindigkeit im Wesentlichen unabhängig von einer auf das obere Stützenteil wirkenden Vertikallast zwischen der Stützstellung und der Ausschalstellung eingerichtet ist. Demnach kann die Bremseinheit gewährleisten, dass die Absenkbewegung von der oberen Stützstellung bis in die untere Ausschalstellung bei verschiedenen Vertikallasten mit im Wesentlichen derselben Absenkgeschwindigkeit erfolgt. Die Stützstellung ist dabei für die Abstützung der Schalungsanordnung sowie des Betons bei einem Betoniervorgang eingerichtet. Demgegenüber soll die Ausschalstellung den Abbau bzw. die Demontage von Schalungselementen von der Schalungsanordnung ermöglichen. Die im Wesentlichen konstante Absenkgeschwindigkeit des oberen Stützenteils beträgt bevorzugt zwischen 0,5 und 50, insbesondere zwischen 1 und 20 Millimeter pro Sekunde. Für die Zwecke dieser Offenbarung bedeutet die erwähnte Unabhängigkeit der Absenkgeschwindigkeit von den Vertikallasten, dass die Absenkgeschwindigkeit jedenfalls bei Trag- bzw. Vertikallasten (zusätzlich zum Eigengewicht des oberen Stützenteils) zumindest von 200 Newton bis 30000 Newton, insbesondere von 100 Newton bis 50000 Newton, im Wesentlichen konstant ist. Diese Ausführung ist insbesondere dann vorteilhaft, wenn die Schalungsanordnung mit mehreren gleichen Schalungsstützen abgestützt wird. Aufgrund der Bremseinheit wirken sich unterschiedliche Vertikallasten auf die Schalungsstützen nicht auf die Absenkgeschwindigkeit aus, so dass die einzelnen Schalungsstützen gleichmäßig in Richtung der Ausschalstellung abgesenkt werden können.

Je nach Ausführung kann die Lagerung der Spindel über die entstehenden Reibungskräfte beim Gewindeeingriff bereits so ausgestaltet sein, dass sich eine von der Last unabhängige Senkgeschwindigkeit einstellt, die für einen sanften Absenkvorgang von der Stütz- in die Ausschalstellung geeignet ist. Dies kann durch entsprechende Ausgestaltung des Außengewindes der Spindel und des Innengewindes des Mutterelements derart realisiert sein, dass die Drehgeschwindigkeit bzw. die Drehzahl der Spindel im Mutterelement auf eine im Wesentlichen konstante, lastunabhängige Absenkgeschwindigkeit eingestellt wird.

In einer bevorzugten Ausführungsform weist die Bremseinheit eine Bremse zum Abbremsen der Relativbewegung zwischen der Spindel und dem Mutterelement bzw. zur Erzielung einer im Wesentlichen konstanten Relativdrehbewegung der Spindel im Mutterelement auf. Bei dieser Ausführung ist eine zusätzliche (d.h. vom Außengewinde der Spindel und dem Innengewinde des Mutterelements verschiedene) Bremse vorgesehen, welche die Bremskraft proportional zur Erhöhung der Drehzahl der Spindel steigern kann, um die Relativbewegung zwischen der Spindel und dem Mutterelement zu bremsen und so die Relativdrehbewegung der Spindel im Mutterelement im Wesentlichen konstant zu halten.

Solche Bremsen sind dem Fachmann in verschiedensten Ausführungen bekannt, wie beispielsweise elektrische, hydraulische, magnetische, elektromagnetische oder auch mechanische Bremsen, wie Fliehkraftbremsen, Rotationsbremsen, Wirbelstrombremsen oder dergleichen.

Gemäß einer besonders bevorzugten Ausführungsform ist die Bremse im unteren Stützenteil, vorzugsweise an dessen unterem Endbereich, angeordnet.

Gemäß einer weiteren bevorzugten Ausführungsform ist die Bremse an dem Lager angeordnet. Bei dieser Ausführung kann die Bremse beispielsweise einen Kugeltrieb, eine Klemme bzw. eine Backe aufweisen.

Bei der eingangs erwähnten Schalungsstützvorrichtung sind bevorzugt mehrere Schalungsstützen vorgesehen, welche in im Wesentlichen vertikaler Stellung in einem horizontalen Abstand zueinander angeordnet sind. Aufgrund dieser Anordnung können in Gebrauch unterschiedliche vertikale Lasten auf die einzelnen Schalungsstützen wirken. Beispielsweise kann jeweils zumindest eine Schalungsstütze in einem Randbereich des Schalungsaufbaus und zumindest eine Schalungsstütze in einem Zentralbereich des Schalungsaufbaus vorgesehen sein. In Gebrauch muss die Schalungsstütze im Zentralbereich höhere vertikale Lasten als die Schalungsstütze im Randbereich aufnehmen. Aufgrund der Bremseinheit wird jedoch die Schalungsstütze im Zentralbereich mit im Wesentlichen derselben Senkgeschwindigkeit wie die Schalungsstütze im Randbereich von der Stütz- in die Ausschalstellung abgesenkt.

Die Erfindung wird nachstehend anhand von in den Zeichnungen dargestellten Ausführungsbeispielen weiter beschrieben.
Fig. 1A zeigt eine Schalungsstützvorrichtung mit mehreren erfindungsgemäßen Schalungsstützen in einer Stützstellung, bei welchen eine Bremseinheit dafür sorgt, dass die Absenkung von der gezeigten Stützstellung in eine Ausschalstellung lastunabhängig erfolgen kann.
Fig. 1B zeigt die Schalungsstützvorrichtung gemäß Fig. 1, wobei die Schalungsstützen in einer abgesenkten Ausschalstellung dargestellt sind.
Fig. 2A, 2B, 2C zeigen jeweils eine erfindungsgemäße Schalungsstütze, welche in der Darstellung der Fig. 2A in der Stützstellung, der Fig. 2B in einer Zwischenstellung und der Fig. 2C in der Ausschalstellung angeordnet ist.
Fig. 3 zeigt eine weitere Ansicht der Schalungsstütze gemäß Fig. 2C.
Fig. 4 zeigt eine Detailansicht der Schalungsstütze in der Stellung gemäß Fig. 3 im unteren Endbereich.
Fig. 5 zeigt einen Längsschnitt eines Lagers der Schalungsstütze gemäß Fig. 1 bis 4.
Fig. 6 zeigt eine auseinander gezogene Ansicht des Lagers der Schalungsstütze gemäß Fig. 5.

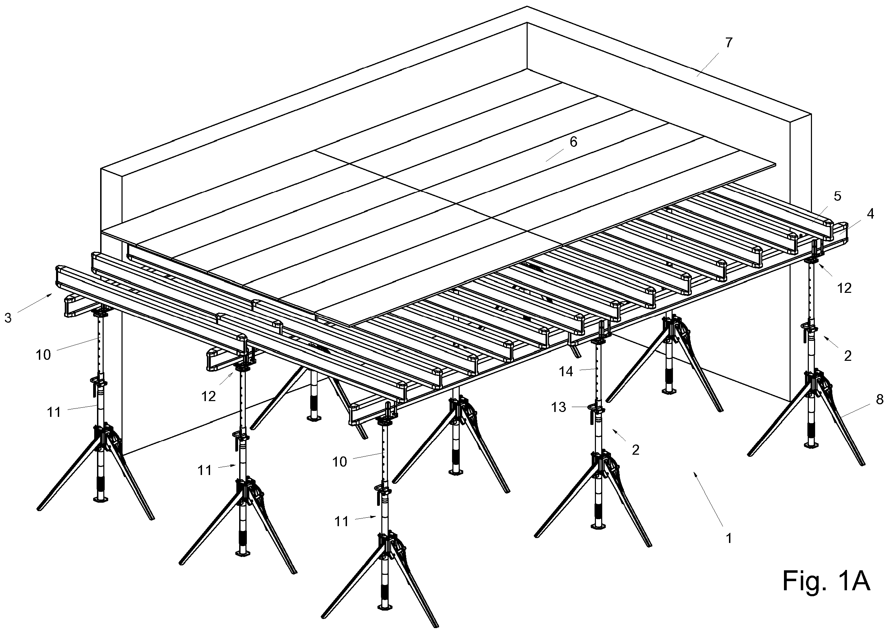

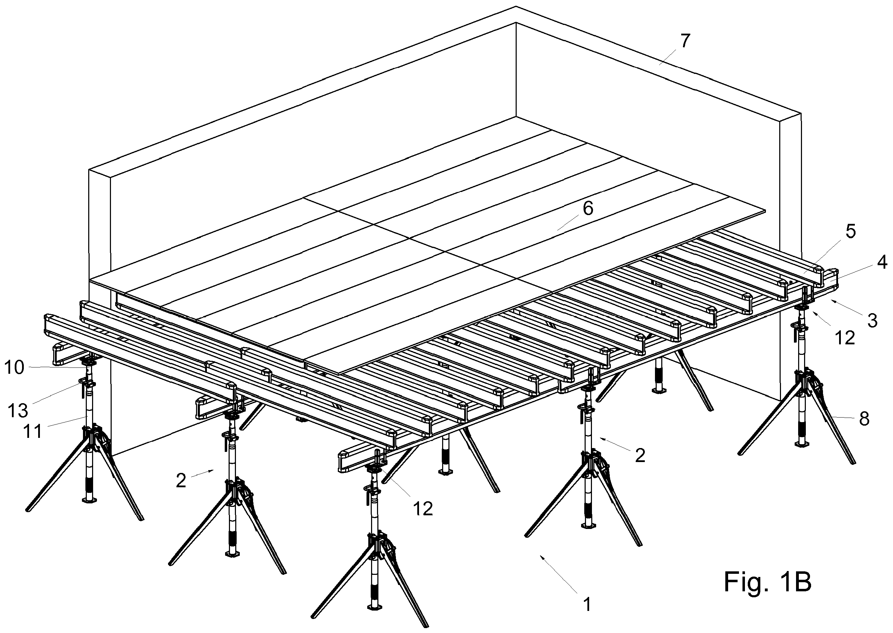

Fig. 1 zeigt eine Schalungsstützvorrichtung 1 mit mehreren am Boden abgestützten und in einem horizontalen Abstand zueinander angeordneten Schalungsstützen 2, welche unterseitig einen Schalungsaufbau 3 unterstellen. Der Schalungsaufbau 3 weist im gezeigten Ausführungsbeispiel auf den Schalungsstützen 2 abgestützte Längs- bzw. Jochträger 4 auf, auf welchen gleichartige, zu den Jochträgern 4 querverlaufende Querträger 5 aufgelagert sind. Der Schalungsaufbau 3 ist zur Herstellung einer Decke eingerichtet, wobei hierfür Schalungsplatten 6 auf der Oberseite der Querträger 5 bis zum Anstoß an eine schematisch gezeigte Wand 7 angeordnet sind. Zur Sicherung der Schalungsstützen 2 in einer vertikalen Stellung sind diese mithilfe von Dreibeinen 8 gestützt. Der Schalungsaufbau 1 ist an sich aus dem Stand der Technik bekannt, so dass sich nähere Ausführungen hierzu erübrigen können.

Im eingebauten Zustand, vor allem während und nach der Herstellung der (nicht gezeigten) Decke aus Beton, werden die Schalungsstützen 2 vertikal belastet. Die Schalungsstütze 2 weist ein oberes Stützenteil 10 auf, welches in ein unteres Stützenteil 11 absenkbar ist. Das obere 10 und das untere Stützenteil 11 ergeben zusammen (abgesehen vom Überlappungsbereich) im Wesentlichen die gesamte Längserstreckung der Schalungsstütze 2.

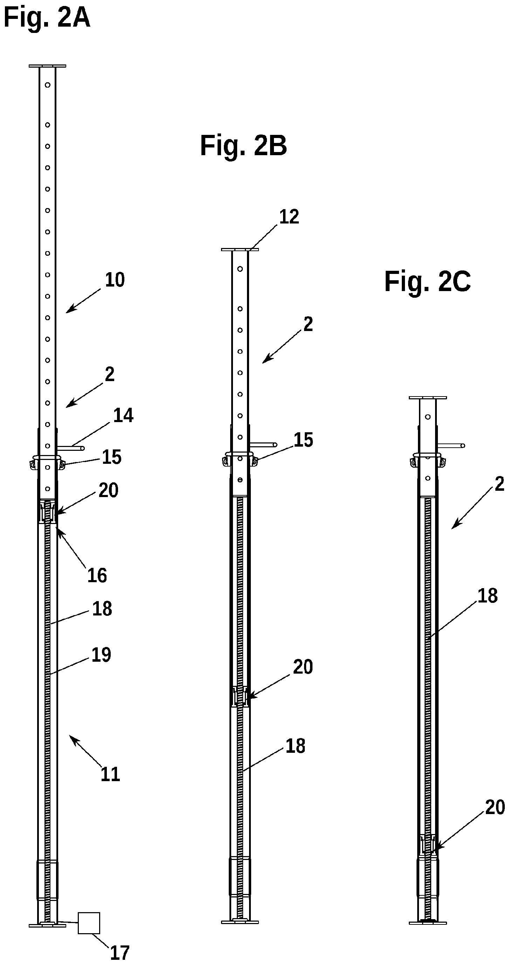

Selbstverständlich können aber auch noch weitere Stützenteile zwischen dem oberen 10 und dem unteren Stützenteil 11 vorgesehen sein. Das obere Stützenteil 10 weist in seinem oberen Endbereich eine plattenförmige Verbreiterung bzw. Stützenplatte 12 auf, auf welcher ein in der gezeigten Ausführung an sich bekannter Haltekopf, beispielsweise in Form eines Vierwegekopfes (vgl. Fig. 1A, 1B), aufgesetzt ist. Auf diesem Kopf ist der Schalungsaufbau 3 abgestützt. In den Fig. 2A ist der Kopf der besseren Übersicht halber nicht dargestellt. In der gezeigten Ausführung ist das obere Stützenteil 10 als Innenrohr ausgeführt, welches in das als Außenrohr ausgebildete untere Stützenteil 11 eingeführt ist. Somit ergibt sich eine teleskopierbare Schalungsstütze 2.

Weiters ist ein Sicherungselement 13 vorgesehen, welches mit in vertikaler Richtung voneinander beabstandeten Halteöffnungen 14 am oberen Stützenteil 10 verbindbar ist. Das Sicherungselement 13 kann in einer Sicherungsstellung innerhalb einer der Halteöffnungen 14 angeordnet werden, um ein Absenken des oberen Stützenteils 10 zu blockieren. Zur Freigabe der Absenkung des oberen Stützenteils 10 wird das Sicherungselement in einer Freigabestellung außerhalb der Halteöffnungen 14 angeordnet. In der gezeigten Ausführung weist das Sicherungselement 13 einen Steckbügel auf, welcher einen Einführabschnitt zum Einführen in eine der Halteöffnungen 14 aufweist. Weiters kann ein Justierelement in Form einer Überwurfmutter 15 vorgesehen sein, womit eine Feineinstellung der Höhe der Stütze 2 ermöglicht wird.

Wie aus Fig. 2A bis Fig. 2C ersichtlich, ist eine Absenk- und Anhebeeinrichtung 16 zum Absenken des oberen Stützenteils 10 von einer den Schalungsaufbau 3 beim Betonieren tragenden Stützstellung (vgl. Fig. 1A) in eine das Entfernen des Schalungsaufbaus 3 ermöglichende Ausschalstellung (vgl. Fig. 1B) und umgekehrt vorgesehen. In der gezeigten Ausführung ist die Absenk- und Anhebeeinrichtung 16 vollständig im Inneren des oberen 10 bzw. des unteren Stützenteils 11 angeordnet.

Wie aus Fig. 2A bis Fig. 2C ersichtlich, weist die Absenk- und Anhebeeinrichtung 16 eine (nur in Fig. 2A symbolisch dargestellte) Bremseinheit 17 derart auf, dass die Absenkung des oberen Stützenteils 10 auf eine im Wesentlichen konstante Absenkgeschwindigkeit - und zwar im Wesentlichen unabhängig von der auf das obere Stützenteil 10 über den Schalungsaufbau 3 übertragenen Vertikallast - von der Stützstellung bis in die Ausschalstellung abgebremst wird. Bei Anordnung des Sicherungselements 13 in der Freigabestellung kann das obere Stützenteil 10 in die Ausschalstellung abgesenkt werden.

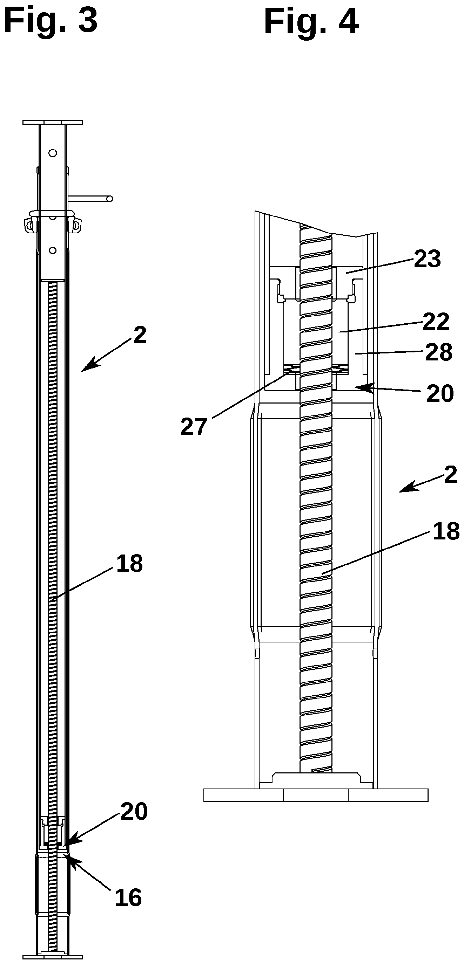

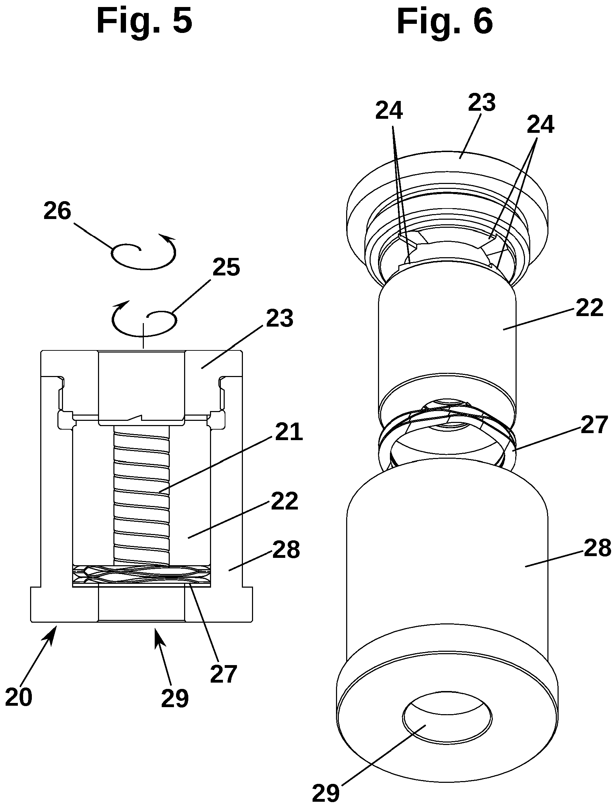

Wie aus Fig. 2A bis Fig. 2C ersichtlich, weist die Absenk- und Anhebeeinrichtung 16 eine Spindel 18 mit einem Außengewinde 19 und ein Lager 20 mit einem Innengewinde 21 (vgl. Fig. 5, 6) auf. Das Lager 20 greift mit dem Innengewinde 21 in das Außengewinde 19 der Spindel 18 ein, welche in der gezeigten Ausführungsform am unteren Stützenteil 11 drehbar gelagert ist. Das Lager 20 ist am unteren Ende des oberen Stützenteils 19 fixiert. Wie im Detail aus den Fig. 4, 5 und 6 ersichtlich, weist das Lager 20 ein Mutterelement 22 mit dem Innengewinde 21 und ein manschettenförmiges Sperrelement 23 auf. Das Mutterelement 22 und das Sperrelement 23 weisen zusammenwirkende Zähne 24 (vgl. Fig. 6) auf, welche an einander zugewandten, im Wesentlichen horizontal erstreckten Stirnseiten des Mutterelements 22 und des Sperrelements 23 vorgesehen sind. Die Verzahnungen zwischen Mutterelement 22 und Sperrelement 23 sind asymmetrisch ausgebildet, so dass die Rotation des Mutterelements 22 relativ zum Sperrelement 23 in die eine Drehrichtung 25 (vgl. Fig. 5) gesperrt, aber in die andere Drehrichtung 26 freigegeben ist. Beim Absenken des oberen Stützenteils 10 treibt das Mutterelement 22 in der gezeigten Ausführungsform die Spindel 18 an, so dass die Spindel 18 in Rotation versetzt wird. Beim Anheben des oberen Stützenteils 10 treibt die Spindel 18 das Mutterelement 22 an, so dass das Mutterelement 22 in Rotation versetzt wird.

Wie insbesondere aus Fig. 4, 5 und 6 weiters ersichtlich, weist das Lager 20 ein Federelement 27 auf, mit welchem die Zähne 24 des Mutterelements 22 in Richtung des Eingriffs in die Zähne 24 des Sperrelements 23 vorgespannt werden.

Wie insbesondere aus Fig. 4, 5 und 6 weiters ersichtlich, weist das Lager in der gezeigten Ausführung ein Gehäuse 28 auf, in welchem das Mutterelement 22 im Wesentlichen vollständig aufgenommen ist. Das Sperrelement 23 ist am oberen Endbereich des Gehäuses 28 fixiert. Am unteren Endbereich weist das Gehäuse 28 eine Durchtrittsöffnung 29 für die Spindel 18 auf. Weiters ist am Gehäuse eine Auflagefläche für das Federelement 27 ausgebildet.

## Patentansprüche

1. Schalungsstütze (2) aufweisend:
ein oberes Stützenteil (10),
ein unteres Stützenteil (11) und
eine Absenk- und Anhebeeinrichtung (16) zum Absenken und Anheben des oberen Stützenteils (10) relativ zum unteren Stützenteil (11) zwischen einer Stützstellung zur Abstützung eines Schalungsaufbaus (3) und einer Ausschalstellung zum Abbau des Schalungsaufbaus (3), wobei die Absenk- und Anhebeeinrichtung (16) eine Spindel (18) mit einem Außengewinde (19) und ein Lager (20) mit einem Innengewinde (21) aufweist,
wobei das Lager (20) mit dem Innengewinde (21) in das Außengewinde (19) der Spindel (18) eingreift,
wobei die Spindel (18) an einem von dem unteren (10) und oberen Stützenteil (11) drehbar gelagert ist und das Lager (20) mit dem anderen von dem unteren (10) und oberen Stützenteil (11) verbunden ist,
wobei das Lager (20) ein Mutterelement (22) mit dem Innengewinde (21) und ein Sperrelement (23) aufweist, die ineinandergreifende Zähne (24) aufweisen,
**dadurch gekennzeichnet, dass**
die Absenk- und Anhebeinrichtung (16) vollständig im Inneren des oberen (10) bzw. unteren Stützenteils (11) angeordnet ist,
wobei das Mutterelement (22) und das Sperrelement (23) ineinandergreifende Zähne (24) derart aufweisen, dass die Rotation des Mutterelements (22) in die eine Drehrichtung (25) gesperrt ist, wobei die Spindel (18) beim Absenken des oberen Stützenteils (10) gedreht wird, und die Rotation des Mutterelements (22) in die andere Drehrichtung (26) freigegeben ist, so dass das Mutterelement (22) beim Anheben des oberen Stützenteils (10) durch die Spindel (18) in Drehbewegung versetzt wird.

2. Schalungsstütze (2) nach Anspruch 1, **dadurch gekennzeichnet, dass** das Lager (20) ein Federelement (27) aufweist, mit welchem die Zähne (24) des Mutterelements (22) und des Sperrelements (23) in Richtung einer Eingriffstellung gedrückt werden.

3. Schalungsstütze (2) nach Anspruch 1 oder 2, **dadurch gekennzeichnet, dass** die Zähne (24) an einander zugewandten, vorzugsweise im Wesentlichen horizontal erstreckten Stirnseiten des Mutterelements (22) und des Sperrelements (23) vorgesehen sind.

4. Schalungsstütze (2) nach einem der Ansprüche 1 bis 3, **dadurch gekennzeichnet, dass** das Lager (20) ein Gehäuse (28) aufweist, in welchem das Mutterelement (22) vorzugsweise im Wesentlichen vollständig aufgenommen ist.

5. Schalungsstütze (2) nach Anspruch 4, **dadurch gekennzeichnet, dass** das Sperrelement (23) am Gehäuse (28), vorzugsweise am oberen Endbereich des Gehäuses (28), befestigt ist.

6. Schalungsstütze (2) nach einem der Ansprüche 1 bis 5, **dadurch gekennzeichnet, dass** die Spindel (18) drehbar am unteren Stützenteil (11) gelagert ist, wobei das Lager (20) am unteren Ende des oberen Stützenteils (10) befestigt ist.

7. Schalungsstütze (2) nach einem der Ansprüche 1 bis 6, **dadurch gekennzeichnet, dass** die Absenk- und Anhebeeinrichtung (16) eine Bremseinheit (17) aufweist, welche zum Abbremsen der Absenkung des oberen Stützenteils (10) auf eine im Wesentlichen konstante Absenkgeschwindigkeit im Wesentlichen unabhängig von einer auf das obere Stützenteil (10) wirkenden Vertikallast zwischen der Stützstellung und der Ausschalstellung eingerichtet ist.

8. Schalungsstützvorrichtung mit zumindest einer Schalungsstütze (2) nach einem der Ansprüche 1 bis 7 und mit einem Schalungsaufbau (3), welcher auf der Schalungsstütze (2) abgestützt ist.

9. Schalungsstützvorrichtung nach Anspruch 8, **dadurch gekennzeichnet, dass** mehrere Schalungsstützen (2) vorgesehen sind, welche in im Wesentlichen vertikaler Stellung in einem horizontalen Abstand zueinander angeordnet sind.

## Claims

1. Formwork support (2) comprising:
an upper support part (10),
a lower support part (11), and
a lowering and lifting apparatus (16) for lowering and lifting the upper support part (10), relative to the lower support part (11), between a support position for supporting a formwork structure (3) and a stripping position for removing the formwork structure (3), the lowering and lifting apparatus (16) comprising a spindle (18) having an external thread (19) and a bearing (20) having an internal thread (21),
the internal thread (21) of the bearing (20) meshing with the external thread (19) of the spindle (18),
the spindle (18) being rotatably mounted on one of the lower support part (10) and upper support part (11), and the bearing (20) being connected to the other of the lower support part (10) and upper support part (11),
the bearing (20) comprising a nut element (22) having the internal thread (21) and a locking element (23) having meshing teeth (24),
**characterised in that**
the lowering and lifting apparatus (16) is arranged completely inside the upper support part (10) or lower support part (11),
the nut element (22) and the locking element (23) comprising meshing teeth (24), such that the rotation of the nut element (22) is blocked in one direction of rotation (25), the spindle (18) being rotated when the upper support part (10) is lowered, and the rotation of the nut element (22) being released in the other direction of rotation (26), so that the nut element (22) is set in rotational movement by the spindle (18) when the upper support part (10) is lifted.

2. Formwork support (2) according to claim 1, **characterised in that** the bearing (20) comprises a spring element (27) by means of which the teeth (24) of the nut element (22) and the locking element (23) are pushed towards an engagement position.

3. Formwork support (2) according to either claim 1 or claim 2, **characterised in that** the teeth (24) are provided on mutually facing, preferably substantially horizontally extending end faces of the nut element (22) and of the locking element (23).

4. Formwork support (2) according to any of claims 1 to 3,
**characterised in that** the bearing (20) comprises a housing (28) in which the nut element (22) is preferably substantially completely accommodated.

5. Formwork support (2) according to claim 4, **characterised in that** the locking element (23) is fastened to the housing (28), preferably to the upper end region of the housing (28).

6. Formwork support (2) according to any of claims 1 to 5,
**characterised in that** the spindle (18) is rotatably mounted on the lower support part (11), the bearing (20) being fastened to the lower end of the upper support part (10).

7. Formwork support (2) according to any of claims 1 to 6,
**characterised in that** the lowering and lifting apparatus (16) comprises a braking unit (17) which is designed to brake the lowering of the upper support part (10) to a substantially constant lowering speed substantially independently of a vertical load acting on the upper support part (10) between the support position and the stripping position.

8. Formwork support device comprising at least one formwork support (2) according to any of claims 1 to 7 and comprising a formwork structure (3) which is supported on the formwork support (2).

9. Formwork support device according to claim 8, **characterised in that** a plurality of formwork supports (2) are provided, which are arranged in a substantially vertical position at a horizontal distance from one another.

## Revendications

1. Support de coffrage (2) présentant :
une partie de support supérieure (10),
une partie de support inférieure (11) et
un dispositif d'abaissement et de levage (16) pour abaisser et lever la partie de support supérieure (10) par rapport à la partie de support inférieure (11) entre une position de support pour supporter une structure de coffrage (3) et une position de décoffrage pour démonter la structure de coffrage (3), le dispositif d'abaissement et de levage (16) présentant une broche (18) avec un filetage extérieur (19) et un palier (20) avec un filetage intérieur (21),
le palier (20) avec le filetage intérieur (21) s'engrénant dans le filetage extérieur (19) de la broche (18),
la broche (18) étant disposée de manière rotative au niveau de l'une des parties de support inférieure (10) et supérieure (11), et le palier (20) étant relié à l'autre des parties de support inférieure (10) et supérieure (11),
le palier (20) présentant un élément d'écrou (22) avec le filetage intérieur (21) et un élément de verrouillage (23) qui présentent des dents (24) s'engrénant les unes dans les autres,
**caractérisé en ce que** le dispositif d'abaissement et de levage (16) est disposé entièrement à l'intérieur de la partie de support supérieure (10) et/ou inférieure (11),
l'élément d'écrou (22) et l'élément de verrouillage (23) présentant des dents (24) s'engrénant les unes dans les autres de telle sorte que la rotation de l'élément d'écrou (22) dans un sens de rotation (25) est bloquée, la broche (18) étant tournée lors de l'abaissement de la partie de support supérieure (10), et la rotation de l'élément d'écrou (22) dans l'autre sens de rotation (26) étant libérée de sorte que l'élément d'écrou (22) est mis en rotation par la broche (18) lors du levage de la partie de support supérieure (10).

2. Support de coffrage (2) selon la revendication 1, **caractérisé en ce que** le palier (20) présente un élément de ressort (27) avec lequel les dents (24) de l'élément d'écrou (22) et de l'élément de verrouillage (23) appuient en direction d'une position d'engrènement.

3. Support de coffrage (2) selon l'une quelconque des revendications 1 ou 2, **caractérisé en ce que** les dents (24) sont prévues sur des faces avant se faisant face, de préférence s'étendant essentiellement horizontalement, de l'élément d'écrou (22) et de l'élément de verrouillage (23).

4. Support de coffrage (2) selon l'une quelconque des revendications 1 à 3, **caractérisé en ce que** le palier (20) présente un boîtier (28) dans lequel l'élément d'écrou (22) est logé de préférence essentiellement entièrement.

5. Support de coffrage (2) selon la revendication 4, **caractérisé en ce que** l'élément de verrouillage (23) est fixé au niveau du boîtier (28), de préférence au niveau de la zone d'extrémité supérieure du boîtier (28).

6. Support de coffrage (2) selon l'une quelconque des revendications 1 à 5, **caractérisé en ce que** la broche (18) est disposée de manière rotative sur la partie de support inférieure (11), le palier (20) étant fixé au niveau de l'extrémité inférieure de la partie de support supérieure (10).

7. Support de coffrage (2) selon l'une quelconque des revendications 1 à 6, **caractérisé en ce que** le dispositif d'abaissement et de levage (16) présente une unité de frein (17) étant configurée pour freiner l'abaissement de la partie de support supérieure (10) à une vitesse d'abaissement essentiellement constante, essentiellement indépendamment d'une charge verticale agissant sur la partie de support supérieure (10) entre la position de support et la position de décoffrage.

8. Dispositif de support de coffrage avec au moins un support de coffrage (2) selon l'une quelconque des revendications 1 à 7 et avec une structure de coffrage (3) qui est supportée sur le support de coffrage (2).

9. Dispositif de support de coffrage selon la revendication 8, **caractérisé en ce que** plusieurs supports de coffrage (2) sont prévus qui sont disposés à une distance horizontale les uns des autres dans une position essentiellement verticale.
